(19) Europäisches Patentamt
European Patent Office
Office européen des brevets

(11) **EP 2 693 792 A1**

(12) **EUROPEAN PATENT APPLICATION**

(43) Date of publication:
**05.02.2014 Bulletin 2014/06**

(51) Int Cl.:
***H04W 16/14*** (2009.01)

(21) Application number: **12179309.5**

(22) Date of filing: **03.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **The European Union, represented by the European Commission 1049 Brussels (BE)**

(72) Inventors:
• **Baldini, Gianmarco 21027 Ispra (IT)**

• **Cano Pons, Eduardo 21027 Ispra (IT)**
• **Borio, Daniele 10093 Collegno (TO) (IT)**
• **Goratti, Leonardo 21018 Sesto Calende (IT)**

(74) Representative: **Office Freylinger P.O. Box 48 8001 Strassen (LU)**

(54) **Cognitive radio network**

(57)    A cognitive radio terminal, CRT, for participating in a cognitive radio network that comprises a resource manager, RM, includes
o a database implementing a local dynamic radio environment map, which comprises a CRT position estimate, location parameters and transmission parameters of other radio emitters;
o a transceiver module for emitting and receiving radio signals and for recording LCPSDs; and
o a processor operatively connected to the transceiver module.

The processor is configured to update the local dynamic REM based upon the LCPSDs, using an iterative process that comprises

a) providing a state vector representing at least a part of the local dynamic REM,
b) predicting a state vector update on the basis of an evolution model and
c) correcting the state vector update based on the LCPSDs, the corrected state vector update being used to update the local dynamic REM.

The processor is configured to transmit, via the transceiver module, the LCPSD, said estimate of the position of the CRT and the current transmission parameters of the CRT to the RM for computation of aggregated interference and to receive from the RM an allocation of communication resources, which the CRT may use for communication with other CRTs of the cognitive radio network.

Fig. 1

EP 2 693 792 A1

## Description

## Technical field

The present invention generally relates to a cognitive radio (or wireless) network, in particular, to a cognitive radio terminal for such a network and to a resource manager that allocates communication resources to the cognitive radio terminal of the network.

## Background Art

With the rapid evolution of microelectronics, wireless networking devices are becoming more versatile, powerful, and portable. This has enabled the development of software-defined radio (SDR) technology over the past 15 years, where the baseband digital processing is mostly performed in software. Because of its high degree of reconfigurability and easiness to program, SDR is a technology enabler for cognitive radio (CR). Cognitive radio is a radio or wireless communication technology that is able to change dynamically its transmission or reception parameters by using the information collected or sensed on the external environment. Cognitive radio may enable the concept of Dynamic Spectrum Access (DSA), where radio frequency bands are dynamically assigned in function of time and space. This approach is an alternative to the conventional spectrum regulation where spectrum bands are statically assigned by the regulators for specific wireless services.

Cognitive radio networks (CRN) implement a number of tasks in order to enable DSA: spectrum sensing, spectrum decision, spectrum sharing, and spectrum mobility. Each of these tasks implies the collection and processing of specific information useful to gain knowledge on the surrounding spectrum environment and the available spectrum resources. This information may include knowledge of the presence of wireless services in the area, allocation of spectrum bands in the area, information on telecom operators and so on. A CR Terminal (CRT) may collect and process this information on its own or collaborate with other CRTs present in the area. The latter case is the foundation of collaborative CRN, where CRTs exchange information to converge to a common allocation of spectrum bands or to improve the utilization of the spectrum. CRN can be used to implement secondary opportunistic radio networks, which may utilize portions of the radio frequency spectrum that are not used by primary (or licensed) radio services or Primary Users (PUs) in space, time or frequency. For example, in the "white spaces" paradigm, CRN exploits unused portions of the radio frequency spectrum in the spectral bands assigned to the Digital TV Broadcast (DTVB) radio service. In the present context, a white space is part of the spectrum, which is available for a radio communication application (service, system) at a given time in a given geographical area on a non-interfering/non-protected basis with regard to other services (primary users) with a higher priority on a national basis (ECC Report 159 Technical and Operational Requirements for the Possible Operation of Cognitive Radio Systems in the 'White Spaces' of the Frequency Band 470-790 MHz; Electronic Communications Committee (ECC) January 2011.) TV white spaces are probably the best example in this context (see e.g. Nevokee M., Quantifying the Availability of TV White Spaces for Cognitive Radio Operation in the UK, June 2009.)

An important requirement for a CRN is mitigation of harmful wireless interference towards the primary users. This invention proposes a cognitive radio network, which enables the use of location information of the cognitive radio nodes to mitigate the impact of aggregated interference to primary users.

The American Federal Communications Commission (FCC) defines a cognitive radio as a radio that can change its transmitter parameters based on interaction with the environment in which it operates (see FCC, Spectrum Policy Task Force, ET-Docket No. 02-155. Technical Report November 2002.) According to Mitola J., "Cognitive Radio: An Integrated Agent Architecture for Software Defined Radio", Royal Institute of Technology (KTH), PhD Dissertation June 2000, a cognitive radio network is a system, which has the following capabilities:

○ to obtain the knowledge of radio operational environment and established policies and to monitor usage patterns and users' needs;

○ to dynamically and autonomously adjust its operational parameters and protocols according to this knowledge in order to achieve predefined objectives, e.g. more efficient utilization of spectrum; and

○ to learn from the results of its actions in order to further improve its performance.

A cognitive radio is thus able to *sense* and collect data on the external operation environment, *adapt* its parameters and *learn* how to increase the spectrum efficiency and transmission robustness. These capabilities are used in the "cognitive cycle", which is based on the following functions or steps:

○ Spectrum sensing: a cognitive radio monitors the spectrum environment to identify available spectrum bands for communication.

○ Spectrum analysis: the information on the spectrum environment, regulatory constraints, capabilities of the networks and terminals is collected, processed and analyzed.

○ Spectrum decision: the cognitive radio or network determines the spectrum bands for communications and the other parameters for communication including data rate, transmission powers, modulation, bandwidth and so on.

The cognitive cycle is iterative: a cognitive radio or cognitive network will iterate these steps to improve the spectrum utilization and quality of services in response to change in the spectrum environment or the network itself.

Cognitive radio networks can be cooperative or non-cooperative. In cooperative networks, the cognitive radio nodes exchange information for each function described above in order to optimize the cognitive cycle process. In non-cooperative networks, each node performs the above functions on its own. Cooperative networks are usually more efficient than non-cooperative networks and they converge faster to an optimum solution.

According to the literature, two methods are currently used to identify white spaces: spectrum sensing and using a geolocation database (GLDB). These two methods are compared in Shellhammer S. J., A Comparison of GEO-Location and Spectrum Sensing in Cognitive Radio, IEEE 2009. It is worth pointing out here that the FCC defines the use of a protection contour, which is defined as the distance from a primary radio service transmitter beyond which CRTs are allowed to transmit. However, it is recognized by the scientific community and the industry that spectrum sensing alone would not be sufficient to guarantee enough protection toward the PUs.

An important aspect of the cognitive cycles is the localization of the cognitive radio terminals. Accurate position information on the CRTs is indeed required in order to guarantee protection of the primary users (see e.g. Celebi, H.; Arslan H.; "Utilization of Location Information in Cognitive Wireless Networks," IEEE Wireless Communications, August 2007, pp. 6-13.) A straightforward solution to the localization problem is to equip the CRTs with GNSS chips, which are nowadays available at low cost. Nevertheless, GPS or other satellite navigation services may fail to provide precise enough position information in "difficult" environments, e.g. in urban canyons or indoors. Moreover, in certain circumstances, even a position accuracy of few meters (e.g. 10 meters) may not be sufficient for effectively protecting the primary users.

The paper Wymeersch, H.; Lien, J.; Win, M.Z.; "Cooperative Localization in Wireless Networks," Proceedings of the IEEE , vol.97, no.2, pp.427-450, Feb. 2009 describes cooperative localization algorithms. The known algorithms rely on direct communication between the CRTs.

## Technical problem

It is an object of the present invention to enable accurate localization of CRTs, which can be exploited to mitigate the impact of aggregated interference to primary users. This object is achieved by a CRT as claimed in claim 1.

## General Description of the Invention

According to the invention it is proposed a CRT for participating in a (cooperative) cognitive radio network that comprises a resource manager allocating the communication resources (frequency/ies, bandwidths, modulation types, etc.) to the CRTs of the network. The CRT comprises

○ a database implementing a local dynamic radio environment map, the local dynamic radio environment map comprising an estimate of the position of the CRT, as well as location parameters and transmission parameters of other radio emitters (such as primary users or other CRTs);

○ a transceiver module for emitting radio signals in accordance with transmission parameters of said cognitive radio terminal, for receiving radio signals and for recording a local power spectral density at the CRT (hereinafter: "local CRT power spectral density" or in short "LCPSD"); and

○ a processor operatively connected to the transceiver module.

The processor is configured to update the local dynamic radio environment map based upon the LCPSD, using an iterative process that comprises

a) providing a state vector representing at least a part of the local dynamic radio environment map, said part including the estimate of the position of the CRT,

b) predicting a state vector update on the basis of an evolution model describing expected state vector evolution and

c) correcting the state vector update on the basis of the LCPSD, the corrected state vector update being used to update the local dynamic radio environment map and, in particular, the position estimate.

The processor is further configured to transmit, via the transceiver module, the LCPSD, the estimate of the position of the CRT and the current transmission parameters of the CRT to the resource manager for computation of aggregated interference and to receive from the resource manager an update of the transmission parameters (which reflect the allocation of communication resources allocated to the CRT by the resource manager), the cognitive radio terminal being configured to apply these updated transmission parameters for communication with other cognitive radio terminals of the cognitive radio network. The new allocation of communication resources is calculated by the resource manager with the objective of minimizing the impact of aggregated interference to the primary user receivers. In the context of the present document, the term "aggregated interference" designates the total power level at a certain location, i.e. the input of a victim receiver, coming from two or more interference sources.

It shall be noted that the term "LCPSD", in the present context, designates the power spectral density at the location of the CRT at a certain time. The LCPSDs may thus be represented as vectors ($PW_i$, $Freq_i$) where $PW_i$ is the received power (e.g. expressed in dBm) at the specific frequency $Freq_i$.

The process steps a)-c) are preferably carried out autonomously. However, the CRT may regulary exchange LCPSDs and/or position estimates with other CRTs in order to make its own calculations consistent with those of the other CRTs and to make the iterative process converge more rapidly.

The processor preferably uses a SLAM (simultaneous localization and mapping) algorithm for updating the local dynamic radio environment map, the radio emitters (primary user base stations and/or other CRTs) being used within the SLAM algorithm as stationary or mobile, as the case may be, anchors.

Preferably, the location parameters comprise coordinates of the radio emitters. The coordinates may be expressed with respect to a frame of reference centered on the CRT or another frame of reference, in which the CRT's coordinates are calculated as part of the state vector.

The transmission parameters of the radio emitters preferably comprise the transmission power and the modulation type (e.g. BPSK, QPSK, etc.) used by the radio emitters. The transmission parameters may also include the frequency band used for the transmission.

The radio emitters may comprise other CRTs of the cognitive radio network and/or licensed radio emitters (primary users).

Preferably, the processor and the transceiver module are configured to communicate with the resource manager over a control channel (hereinafter called common control channel or CCC), which is used in common by all CRTs of the cognitive radio network. The CCC may be used to exchange the information for spectrum sensing, analysis and decision among the nodes of the cognitive radio network. Preferably, the CCC is used to distribute different kinds of messages:

(a) among the CRTs: messages containing the LCPSDs, the estimated position, and, possibly, the current transmission parameters (e.g. data rate, modulation type, low duty cycle, transmitted power and frequency occupation);

(b) from the CRTs to the resource manager: messages containing the LCPSDs, the estimated position and the current transmission parameters;

(c) from the resource manager to the CRTs: messages containing new (i.e. updated) transmission parameters, which the receiving CRT must use in order to mitigate the impact of aggregated interference on the basis of the estimation made by the resource manager. These messages may comprise an indication that the receiving CRT must stop transmitting (e.g. the resource manager sets the "transmitted power" parameter to zero.)

The CCC satisfies a set of requirements related to the context or the domain where the cognitive radio network is deployed. The CCC is preferably established in a frequency band reserved for this purpose. The CCC may be used for distributing messages, which include information on the spectrum environment detected by each cognitive radio node, any information that could support the spectrum analysis function and, finally, the assigned bands and communication parameters defined by the spectrum decision function.

According to a preferred embodiment of the invention, the processor is thus configured to receive, via the transceiver module, LCPSDs and/or position estimates of other CRTs of the cognitive radio network.

The CRT may comprise one or more sensors, such as e.g. a position and/or acceleration sensor, for providing position-related measurements. In this case, the processor is preferably operatively connected to the one or more sensors and configured to take the position-related measurements into account when predicting a state vector update and/or correcting the state vector update.

The processor may e.g. use a particle filter or an Extended Kalman filter when predicting the state vector update and to correct the state vector update.

Another aspect of the present invention relates to a resource manager for a cognitive radio network that comprises a plurality of CRTs. The resource manager comprises:

○ a transceiver module for communicating with the CRTs;

○ a processor operatively connected to the transceiver module,

The resource manager's processor is preferably configured to receive, via the transceiver module, LCPSDs, position estimates and the current transmission parameters from the CRTs, to compute an aggregated interference for all the points of a grid covering the area of the resource manager's responsibility, to determine updated transmission parameters for the CRTs and to transmit, via the transceiver module, the updates of the transmission parameters to the CRTs. If the aggregated interference is locally too high, the resource manager determines how the transmission parameters of the CRTs have to be adjusted in order to guarantee the protection of the primary users. The resource manager finally transmits the corresponding corrected transmission parameters to the CRTs (via the CCC).

The resource manager preferably comprises or is configured for communicating with a geolocation database of licensed radio emitters (primary users). It then adjusts the transmission parameters of the CRTs (i.e. allocates communication resources) in such a way as to maintain the aggregated interference from the CRTs to the primary users below a predefined threshold (e.g. a threshold defined by the spectrum regulator).

As will be appreciated, a cognitive radio network comprising CRTs and a resource manager as defined hereinabove.

## Brief Description of the Drawings

A preferred embodiment of the invention will now be described, by way of a non-limiting example, with reference to the accompanying drawings in which:

Fig. 1 is a schematic diagram of a cognitive radio network according to the preferred embodiment of the invention;

Fig. 2 is a flowchart illustrating the cognitive cycle used in the context of the invention embodiment illustrated in Fig. 1.

Fig. 3 is a perspective view.

## Description of Preferred Embodiments

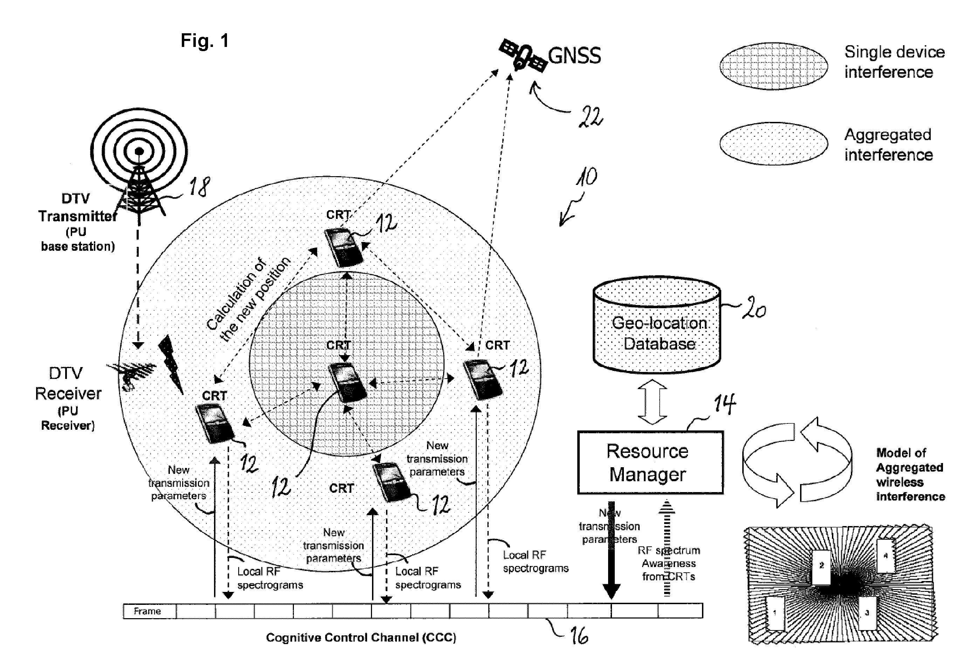

The cognitive radio network 10 illustrated in Fig. 1 comprises several CRTs 12, which are in communication with a resource manager 14 via a CCC 16. The cognitive radio network has to coexist with primary users (illustrated as a DTV transmitter 18) without deteriorating the services provided by them. The resource manager (RM) 14 may communicate with a geolocation database (GLDB) 20 in order to obtain information about the primary users 18 and the protection levels defined by the regulators. The CCC 16 is used to distribute cognitive messages exchanged among the cognitive radio nodes.

The CRTs 12 opportunistically use the radio frequency spectrum of the "white spaces". Each CRT 12 uses a localization algorithm based on SLAM to autonomously improve the accuracy of its location initially estimated e.g. on the basis of a GNSS system 22. In a later step, the CRT12 communicates its improved location (position estimate) to the RM 14 through the CCC.

The RM 14 is responsible for calculating the new values of the transmission parameters for the CRTs 12 based on a model of aggregated wireless interference.

The CCC 16 is a wireless communication channel, which uses a spectrum band specifically allocated in a separate frequency of the main "white spaces" spectral bands. The CCC may be an out-of-band channel (with respect to the white spaces) dedicated to the CR network. Alternatively, the CCC may be an in-band CCC, which uses a specific licensed band of a cellular network like UMTS.

Data links established between CRTs are also referred to as secondary links. Hereafter, CRTs are also referred to secondary users (SUs) interchangeably. Digital TV broadcasters are examples of primary users (PUs), which do not belong to the CRN. DTVB base stations (i.e. PU base stations) can be used as anchors for the SLAM algorithm executed by the different CRTs of the CRN.

The architecture is:

○ distributed for the augmentation of the location information based on simultaneous location and mapping (SLAM). Each CRT uses a SLAM-based algorithm described in more detail hereinafter in to localize itself within a local dynamic radio environment map. No central system or node is used.

○ centralized for the provision of the information from the CRTs to the RM and the consequent distribution of the new parameters to the CRTs in order to mitigate interference to the primary radio services.

The main elements of the illustrated embodiment of the invention are:

○ a SLAM algorithm providing the location awareness of the individual CRTs.

○ a collaborative CR algorithm, where the CRTs exchange information with the resource manager (and possibly among themselves) using the CCC.

○ a model used by the resource manager to calculate aggregated interference in a specific area.

The framework is based on the RM 14, which is responsible for modeling the aggregated interference and changing the transmission parameters of the CRTs 12.

The RM 14 coordinates the CRTs 12 in order to achieve enough protection for the PU and maximize the number of secondary data links (i.e. links among the different CRTs) that can be scheduled within a certain region. In particular, the RM uses a combination of location information and radio parameters to set the transmission parameters of the CRTs.

The illustrated embodiment of the invention focuses on improving the accuracy of the CRTs' location information at any given time and using this information to improve the precision and details of the CRTs' local dynamic radio environment maps (REMs) so that the RM can calculate the impact of wireless interference or improve spectrum utilization and capacity of the CR network itself.

In the context of the illustrated embodiment, the following holds:

1) the RM and the CRTs are capable of transmitting signaling information over the CCC within the area under the RM's responsibility (e.g. covering distances of up to several kilometers). On the other hand, data transmission over secondary links is envisaged to occur over a distance that can be up to few hundreds of meters. The RM can be connected to one or more fixed base stations.

2) Each CRT conveys the following information to the RM, via the CCC:

   a. Location parameters: CRT's own coordinates.

   b. The current value of the transmission parameters of the CRT: data rate, modulation type, duty cycle, transmitted power and frequency occupation.

   c. Local information on the spectrum environment, which is sensed by the CRTs. This data is a PSD based on the current location of the CRT. It is referred to as "LCPSD". The LCPSDs are represented as vectors $(PW_i, Freq_i)$ where $PW_i$ is the received power expressed in dBm of the Primary User at the specific frequency $Freq_i$. This information is used by the SLAM algorithm.

3) Through the CCC, the CRTs exchange among themselves the local information on the spectrum environment (i.e. the LCPSDs). In this case, the information is used for the implementation of the SLAM algorithm.

4) The RM has pre-installed propagation and interference models. On the basis of the inputs provided by the CRTs, the RM determines the overall levels of aggregated interference to primary users in the area of responsibility. RM uses this information as an input to decide how radio parameters of the CRTs have to be adjusted in order to mitigate the impact of aggregated interference to PU receivers.

5) The RM is responsible for steering radio parameters upon combining sensing information (LCPSDs) and position estimates provided by the CRTs and an REM stored in the GLDB accessible by the RM. The RM is assumed a more powerful entity compared with the single CRT in terms of computational capabilities and energy.

6) The RM distributes a new set of transmission parameters to the CRTs through the CCC. This set of information may include one or more of the following parameters: data rate, modulation type, duty cycle, transmitted power and frequency occupation. A transmitted power of zero indicates that the CRT must stop transmitting as soon as the message is received from the RM on the CCC.

7) The RM thus combines observations that are supplied by a set of CRTs. It returns indications to one or more CRTs on how radio parameters have to be adjusted in order to obtain a twofold effect: i) PU protection and ii) maximization of the number of secondary links.

In order to build or update its local dynamic radio environment map, each CRT uses an iterative process that comprises a) providing a state vector representing at least a part of the local dynamic radio environment map, b) predicting a state vector update on the basis of an evolution model describing expected state vector evolution and c) correcting the state vector update on the basis of spectrum measurements (i.e. the recorded LCPSDs).
The state vector is a set of variables defining the current state of the radio environment of a CRT. The state vector may be written as

$$Z(t) = \begin{bmatrix} z_0(t) \\ z_1(t) \\ \vdots \\ z_n(t) \end{bmatrix}$$

where $z_i(t)$ is a column vector defining the state of the ith element of the local dynamic radio environment map at the time t. Each element of the map is considered as an anchor and can be either a neighboring CRT or a primary user. $z_0(t)$ refers to the state of the CRT that carries out the process.
Each vector, $z_i(t)$, includes the dynamic and RF parameters of the anchor:

$$z_i(t) = \begin{bmatrix} x_i(t) \\ y_i(t) \\ v_{x,i}(t) \\ v_{y,i}(t) \\ P_{Tx,i}(t) \\ m_i(t) \end{bmatrix}$$

where the parameters, $(x, y, v_x, v_y)$ define the anchor position and velocity at the instant t, $P_{Tx}$ is the transmitted power and m an index defining the type of modulation adopted for transmission. (In this example, the map is two-dimensional - in case of a three-dimensional map, a third position coordinate and a third velocity coordinate have to be added.) The state vector is a materialization of the local dynamic REM.

The processor of each CRT has access to an evolution model that describes the expected evolution of the state vector. This model includes a noise term accounting for stochastic behaviour of the CRTs:

$$Z(t+1) = F\left(Z(h), h \le t\right) + N(t)$$

Here, F(.) is a vector function that uses past information to predict the state vector at the next time instant. N(t) is a noise vector. N(t) may be modeled as Gaussian noise with correlated components.

Each CRT performs measurements used by the processor to update the state vector. In this case, the measurements are obtained through spectrum sensing and are defined as

$$V(t) = \begin{bmatrix} P_{Rx}\left(t, f_0\right) \\ P_{Rx}\left(t, f_1\right) \\ \vdots \\ P_{Rx}\left(t, f_{N-1}\right) \end{bmatrix}$$

where $P_{Rx}(t, f_i)$ is the received power at the time t and frequency $f_i$. The set $\left\{f_i\right\}_{i=0}^{N-1}$ is the set of frequencies over which the power spectral density is measured by the CRT. The vector V(t) represents an LCPSD recorded by the CRT.

A so-called measurement model establishes the relationship between the measurements and the state vector:

$$V(t) = G\left(Z(t)\right) + M(t)$$

where G(.) is a vector function linking the received power to the state parameters. M(t) is measurement noise usually modeled as Gaussian. The power received from a single radio emitter is given by the transmitted power attenuated by a distance dependent factor. Distances are obtained using the position information embedded in the state vector.

The parameter, $m_i$, which describes the type of the modulation, allows the CRT to determine the power contribution of the different radio emitters at each frequency.

The modified SLAM problem defined above can be solved using an Extended Kalman Filter (EKF) or a Particle Filter (PF). Both EKF and PF require a prediction state based on the evolution model and an update state based on the available measurements. An additional update state, performed at the data exchange rate, can be implemented when measurements from other CRTs are available. The EKF and PF can be initialized using a-priori information for example provided by GNSS (Global Navigation Satellite System) or by the RM.

GNSS usually provides the user position and velocity. As already indicated, the state vector is given by a set of sub-vectors, $z_i(t)$, moreover the first vector, $z_0(t)$, contains the position and velocity of the CRT. If initial position, $(x_{GPS}; y_{GPS})$ and velocity $(v_{x,GPS}; v_{y,GPS})$ are provided for example by an embedded GNSS receiver, then the vector $z_0(t)$ can be initialized as follows:

$$z_0(0) = \begin{bmatrix} x_{GPS} \\ y_{GPS} \\ v_{x,GPS} \\ v_{y,GPS} \\ 0 \\ 0 \end{bmatrix}.$$

The transmitted power and modulation parameter of the CRT are conventionally set to 0 since it is expected that at the beginning the CRT will not broadcast any signal.

The other sub-vectors can be initialized by setting all the parameters to zero. When the transmitted power of an anchor is set to zero, it means that it is not active or it has not been identified by the CRT. Through measurements the CRT will progressively modify and update this parameter determining the correct transmitted power of the anchor.

During data exchange, each CRT broadcasts its measurement vector (the LCPSD) along with the current estimate of its position. The data exchange is done through the CCC. The measurement vectors and the position of the CRTs are used to further update the state vector of each CRT.

Once the location of active CRTs and Primary Users are known at the RM, the RM computes the aggregated interference power level in the RM's area of responsibility, e.g. at the locations of primary radio service receivers. The RM then determines, for each CRT in its area of responsibility, transmission parameters (frequency, transmission power, modulation type, etc.) that keep any interference with the primary users within the bounds set by the regulator. The RM finally allocates communication resources corresponding to these transmission parameters to the CRTs and informs them accordingly via signaling messages over the CCC. In this way, based on the interference characterization of the whole map, each CRT will adapt its transmission parameters (modulation scheme, duty cycle and transmitted power) in order to cause negligible interference to the primary system. If, during the calculation of the aggregated interference, the RM detects that the threshold for the admissible interference within the White Spaces is exceeded (or would be exceeded if the communication resources were allocated in a certain way), the RM must react and enforce other transmission parameters in the CRTs to bring or (to keep) the interference below the threshold.

The RM carries out the calculation of the aggregated interference over a wide geographical area (which includes at least the RM's area of responsibility) and for various spectral bands. The computation effort may be important. That is why the RM preferably comprises or has access to powerful hardware (e.g. a server or data centre).

The RM can obtain the aggregated interference function by considering different approaches:

○ A first approach, which takes into account the estimated positions of all the nodes (CRTs and primary users), comprises applying the Friis transmission equation in order to calculate the received power at the receiver locations of the primary service(s). In this context, several path-loss models, which account for fading and multipath phenomena, may be applied depending on the operation environment.

○ Another approach used to calculate the aggregated interference is based on applying a the statistical model described in Rabbachin, A.; Quek, T.Q.S.; Hyundong Shin; Win, M.Z.; "Cognitive Network Interference," IEEE Journal on Selected Areas in Communications, vol.29, no.2, pp.480-493, February 2011, which considers the relative position of the CRTs within a defined power contour. In this model, the CRT interfering nodes are spatially scattered following a homogeneous Poisson process in a two-dimensional plane and the interference aggregation is modeled following a probability distribution (i.e. truncated-stable distribution for a specified density of CRTs per unit area or a binomial distribution when the number of CRTs is fixed). This approach is more computationally complex but allows a better characterization of the operational environment. It is worthwhile noting that both approaches could be combined. In particular, the second approach could be used to complement the output provided by the first approach.

The RM may use various optimization techniques for computing aggregated interference. An initial estimate thereof can be made based on the density of CRTs (and primary users) in an area, which are transmitting over the same channels. Instead of calculating the aggregated interference for all the points in the entire area of responsibility, the RM can consider only the sub-areas with higher CRT density and limit the computation to those sub-areas. The RM's area of responsibility can be furthermore be divided into cells and the aggregated interference can be computed iteratively with increasing level of detail by progressively passing from a coarse to a finer division of the area of responsibility.

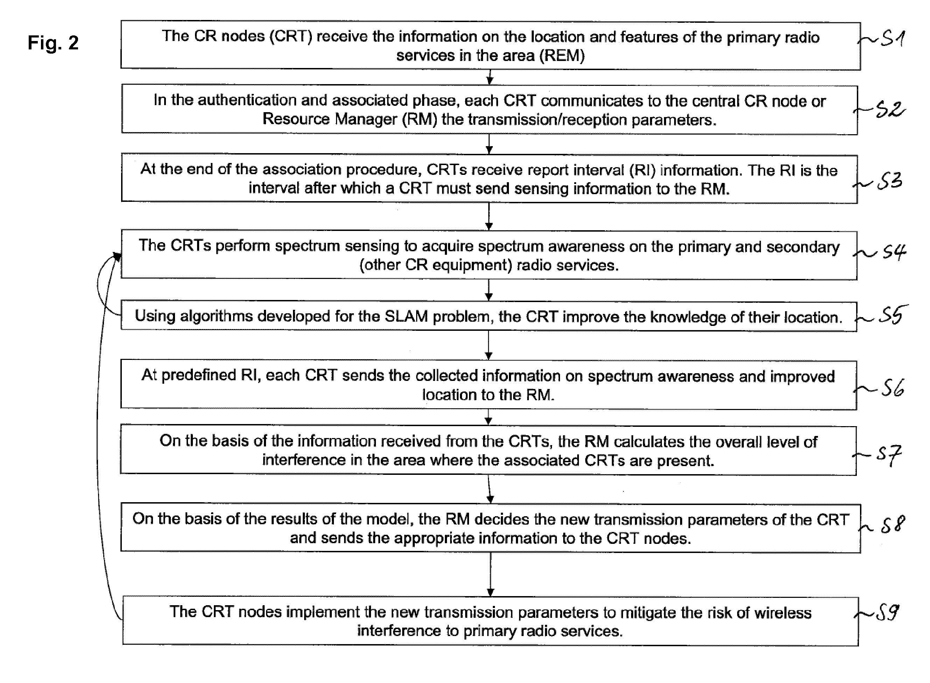

Fig. 2 shows an example of the workflow carried out by the CRTs and the RM. In step S1, the CRTs receive initial information on the locations and features of primary radio services in the area, e.g. from a geolocation database or the RM. The initial information corresponds to an initial radio environment map (e.g. the REM stored in the GLDB). Step S1 could be executed when the CRT is not deployed in the field, for example over a high-speed Internet connection at the user's home. The initial REM can also correspond to the latest REM computed by the CRT.

When a CRT is deployed in the field and switched on, it starts an authentication and association phase (step S2), in which it communicates to the RM the transmission/reception parameters that are already set in the device. The RM has an internal database wherein the transmission/reception parameters of previously associated CRTs are stored and kept up to date.

At the end of the authentication and association procedure, the CRTs receive the report interval (RI) information (step S3). The RI is the interval after which a CRT must send information (a. CRT's coordinates; b. the current value of the transmission parameters of the CRT: data rate, modulation type, duty cycle, transmitted power and frequency occupation; c. LCPSD) to the RM.

Each CRT then carries out spectrum sensing, e.g. by sensing the received power at different frequencies within a frequency band (step S4). The white space region may, for instance, be divided in equally wide channels in order to simplify the procedure. The CRTs are preferably programmed in such a way that they carry out spectrum sensing whenever possible, e.g. when they are not committed with transmitting or receiving data packets.

The spectrum measurements are then used by the CRT to update the local dynamic REM. Each CRT autonomously implements the SLAM approach (step S5). The process of building/updating the RF map can be slow and convergence can be improved through data exchange (positions and LCPSDs) between different CRTs. CRTs thus gain improved awareness of the RF environment. As indicated above, an initial estimate can be based on a GNSS like GPS.

At the specified RI, a CRT sends the LCPSD to the RM through the CCC, and its improved location (thanks to the SLAM algorithm) to the RM (step S6).

On the basis of the information received from the CRTs, the RM uses the aggregated interference model to calculate the overall level of interference power for each specific point in the area where the associated CRTs are present (step S7). As the RM is aware of the CRTs located in a certain geographical region at a given time, it is able to produce a prediction of the aggregate interference power (Pi(t, x, y)) on the basis of the interference model, the propagation model and the density of active CRTs. The pair (x,y) denotes the position wherein the interference is computed. When the RM can use the spectrum sensing information acquired in step S6, the model of the aggregated interference may be refined (for example taking into consideration the effect of fading). Therefore, the REM originally available at the RM side is enhanced thanks to the aggregated interference model. A side benefit of the present method thus resides in an updated REM with improved level of detail thanks to the information collected by the CRTs. For example, a CRT can detect shadowing effect and "hidden problem" situations due to buildings or other obstacles, which are not included in the initial REM stored in the GLDB.

By virtue of the estimated interference power, the RM can check whether the estimated value exceeds or not the maximum interference power allowed by spectrum regulators in a given geographical region and for a specific type of licensed service. The reference interference power defined by the regulators is simply called 'mask'. Thus, for a given set of transmission parameters, the compliance with the mask can be defined on the condition that the aggregated is below the mask.

In case the aggregated interference power exceeds the mask, the RM attempts to re-compute a set of transmission parameters able to validate the mask. These parameters may include new values of the duty cycle, new modulation type, new transmitted power and the use of specific channels and frequencies. Finally, the RM grants the permission to transmit to this subset of CRTs. If the RM is not able to find any combination of transmission parameters, it has to command specific CRTs to stop the transmission by sending on the CCC a transmission power value equal to zero.

In step S9, the CRTs receive a message from the RM allocating them the new transmission parameters to mitigate the risk of wireless interference to primary radio services. After this step, the loop of steps S4-S9 starts again.

As already mentioned, an inaccurate position of one or more CRTs may cause the RM to update its radio map erroneously. In fact, the RM would compute a wrong value for the density of active CRTs at a given estimated position. Therefore, as soon as the accuracy of the position is improved, the RM attempts to re-compute the set of transmission parameters to check whether some of them can be updated in order to improve the performance. As a conclusion of this process, the REM can be improved by the RM.

While a specific embodiment has been described in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

## Claims

1. Cognitive radio terminal for participating in a cognitive radio network comprising a resource manager, said cognitive radio terminal comprising a database implementing a local dynamic radio environment map, said local dynamic radio environment map comprising an estimate of the position of the cognitive radio terminal, as well as location parameters and transmission parameters of other radio emitters; a transceiver module for emitting radio signals in accordance with transmission parameters of said cognitive radio terminal, for receiving radio signals and for recording a local power spectral density at the CRT, hereinafter referred to as LCPSD; a processor operatively connected to said transceiver module, said processor being configured to update said local dynamic radio environment map based upon said LCPSD, using an iterative process that comprises a) providing a state vector representing at least a part of said local dynamic radio environment map, said part including the estimate of the position of the cognitive radio terminal, b) predicting a state vector update on the basis of an evolution model describing expected state vector evolution and c) correcting said state vector update on the basis of said spectrum measurements, said corrected state vector update being used to update said local dynamic radio environment map; said processor being further configured to transmit, via said transceiver module, said LCPSD, said estimate of the position of the cognitive radio terminal and said transmission parameters of said cognitive radio terminal to said resource manager for computation of aggregated interference and to receive from said resource manager an update of transmission parameters, which said cognitive radio terminal may apply for communication with other cognitive radio terminals of said cognitive radio network.

2. Cognitive radio terminal as claimed in claim 1, wherein said processor uses a SLAM algorithm for updating said local dynamic radio environment map, said radio emitters being used within said SLAM algorithm as stationary or mobile, as the case may be, anchors.

3. Cognitive radio terminal as claimed in claim 1 or 2, wherein said location parameters comprise coordinates of said radio emitters.

**4.** Cognitive radio terminal as claimed in any one of claims 1 to 3, wherein said transmission parameters comprise transmission power and modulation type.

**5.** Cognitive radio terminal as claimed in any one of claims 1 to 4, wherein said radio emitters comprise other cognitive radio terminals of said cognitive radio network and/or licensed radio emitters.

**6.** Cognitive radio terminal as claimed in any one of claims 1 to 5, wherein said processor and said transceiver module are configured to communicate with said resource manager over a control channel, which is used in common by all cognitive radio terminals of said cognitive radio network.

**7.** Cognitive radio terminal as claimed in any one of claims 1 to 6, wherein said processor is configured to receive, via said transceiver module, LCPSDs recorded by other cognitive radio terminals of said cognitive radio network and to share, via said transceiver module, its own recorded LCPSD with other cognitive radio terminals of said cognitive radio network.

**8.** Cognitive radio terminal as claimed in any one of claims 1 to 7, comprising one or more sensors, such as e.g. a position and/or acceleration sensor, for providing position-related measurements, wherein said processor is operatively connected to said one or more sensors and configured to take said position-related measurements into account when predicting a state vector update and/or correcting said state vector update.

**9.** Cognitive radio terminal as claimed in any one of claims 1 to 8, wherein said processor is configured to predict said state vector update and to correct said state vector update using a particle filter or a Extended Kalman filter.

**10.** Resource manager for a cognitive radio network comprising a plurality of cognitive radio terminals, said resource manager comprising:

a transceiver module for communicating with said cognitive radio terminals;
a processor operatively connected to said transceiver module,
said processor being configured to receive, via said transceiver module, LCPSDs, position estimates and said transmission parameters from said cognitive radio terminals, to compute an aggregated interference based on said LCPSDs, position estimates and said transmission parameters received, to allocate communication resources to said cognitive radio terminals and to transmit, via said transceiver module, updates of said transmission parameters to said cognitive radio terminals.

tive radio terminals.

**11.** Resource manager as claimed in claim 10, comprising or configured for communicating with a geolocation database of licensed radio emitters, said resource manager being configured to allocate said communication resources in such a way as to maintain said aggregated interference below a predefined threshold.

**Fig. 1**

Single device interference

Aggregated interference

GNSS

*22*

*10*

DTV Transmitter (PU base station)

*18*

CRT *12*

Calculation of the new position

CRT

CRT *12*

Geo-location Database *20*

DTV Receiver (PU Receiver)

CRT *12*

CRT *12*

New transmission parameters

Resource Manager *14*

Model of Aggregated wireless interference

New transmission parameters

New transmission parameters

Local RF spectrograms

Local RF spectrograms

New transmission parameters

Local RF spectrograms

New transmission parameters

RF spectrum Awareness from CRTs

Frame

Cognitive Control Channel (CCC) *16*

EP 2 693 792 A1

**Fig. 2**

The CR nodes (CRT) receive the information on the location and features of the primary radio services in the area (REM) — S1

In the authentication and associated phase, each CRT communicates to the central CR node or Resource Manager (RM) the transmission/reception parameters. — S2

At the end of the association procedure, CRTs receive report interval (RI) information. The RI is the interval after which a CRT must send sensing information to the RM. — S3

The CRTs perform spectrum sensing to acquire spectrum awareness on the primary and secondary (other CR equipment) radio services. — S4

Using algorithms developed for the SLAM problem, the CRT improve the knowledge of their location. — S5

At predefined RI, each CRT sends the collected information on spectrum awareness and improved location to the RM. — S6

On the basis of the information received from the CRTs, the RM calculates the overall level of interference in the area where the associated CRTs are present. — S7

On the basis of the results of the model, the RM decides the new transmission parameters of the CRT and sends the appropriate information to the CRT nodes. — S8

The CRT nodes implement the new transmission parameters to mitigate the risk of wireless interference to primary radio services. — S9

EP 2 693 792 A1

Europäisches
Patentamt

European
Patent Office

Office européen
des brevets

# EUROPEAN SEARCH REPORT

Application Number

EP 12 17 9309

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/330919 A1 (GURNEY DAVID P [US] ET AL) 30 December 2010 (2010-12-30) | 1,3-7, 9-11 | INV. H04W16/14 |
| Y | * abstract *<br>* paragraphs [0016] - [0026], [0030] - [0033], [0037] - [0045]; figures 1,2 *<br>* paragraphs [0049] - [0055], [0059] - [0065] * | 2,8 | |
| Y | HASARI CELEBI ET AL: "Cognitive-Radio Systems for Spectrum, Location, and Environmental Awareness",<br>IEEE ANTENNAS AND PROPAGATION MAGAZINE,<br>IEEE SERVICE CENTER, PISCATAWAY, NJ, US,<br>vol. 52, no. 4, 1 August 2010 (2010-08-01)<br>, pages 41-61, XP011320720,<br>ISSN: 1045-9243 | 2 | |
| A | * abstract *<br>* page 1, column 2, line 8 - page 6, column 1, line 53 * | 1,3-11 | |
| Y | WO 2012/076192 A1 (FRAUNHOFER GES FORSCHUNG [DE]; EMMELMANN MARC P [DE]; BOCHOW BERND [DE])<br>14 June 2012 (2012-06-14) | 8 | TECHNICAL FIELDS SEARCHED (IPC) |
| A | * abstract *<br>* page 4, lines 22-29 *<br>* page 5, line 3 - page 10, line 28 *<br>* page 13, line 8 - page 19, line 28 * | 1-7,9-11 | H04W |

The present search report has been drawn up for all claims

| Place of search | Date of completion of the search | Examiner |
|---|---|---|
| Munich | 6 May 2013 | Patras, Paula Larisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 17 9309

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2013

| Patent document cited in search report | | Publication date | Patent family member(s) | | Publication date |
|---|---|---|---|---|---|
| US 2010330919 | A1 | 30-12-2010 | CA | 2766410 A1 | 20-01-2011 |
| | | | EP | 2449831 A2 | 09-05-2012 |
| | | | US | 2010330919 A1 | 30-12-2010 |
| | | | WO | 2011008424 A2 | 20-01-2011 |
| WO 2012076192 | A1 | 14-06-2012 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CELEBI, H. ; ARSLAN H.** Utilization of Location Information in Cognitive Wireless Networks. *IEEE Wireless Communications,* August 2007, 6-13
- **WYMEERSCH, H. ; LIEN, J ; WIN, M.Z.** Cooperative Localization in Wireless Networks. *Proceedings of the IEEE,* February 2009, vol. 97 (2), 427-450

- **RABBACHIN, A. ; QUEK, T.Q.S. ; HYUNDONG SHIN ; WIN, M.Z.** Cognitive Network Interference. *IEEE Journal on Selected Areas in Communications,* February 2011, vol. 29 (2), 480-493